(19) Europäisches Patentamt
European Patent Office
Office européen des brevets

(11) EP 1 489 117 B1

(12) **EUROPEAN PATENT SPECIFICATION**

(45) Date of publication and mention of the grant of the patent:
**09.05.2007 Bulletin 2007/19**

(21) Application number: **03708665.9**

(22) Date of filing: **18.03.2003**

(51) Int Cl.:
***C08F 299/06*** (2006.01) ***G02B 1/04*** (2006.01)

(86) International application number:
**PCT/JP2003/003278**

(87) International publication number:
**WO 2003/078491 (25.09.2003 Gazette 2003/39)**

(54) **RESIN COMPOSITION AND OPTICAL ELEMENT**

HARZZUSAMMENSETZUNG UND OPTISCHES ELEMENT

COMPOSITION DE RESINE ET ELEMENT OPTIQUE

(84) Designated Contracting States:
**DK**

(30) Priority: **18.03.2002 JP 2002075125**

(43) Date of publication of application:
**22.12.2004 Bulletin 2004/52**

(73) Proprietors:
- **DAI NIPPON PRINTING CO., LTD.**
**Tokyo 162-8001 (JP)**
- **The Inctec Inc.**
**Yokohama-shi, Kanagawa 226-0022 (JP)**

(72) Inventors:
- **DOI, Yasuhiro,**
**c/o Dai Nippon Printing Co., Ltd.**
**Tokyo1 62-8001 (JP)**
- **TANIMURA, Toshiyuki,**
**c/o The Inctec, Inc.**
**Yokohama-shi,**
**Kanagawa 226-0022 (JP)**
- **NAKAO, Nobuaki,**
**c/o The Inctec, Inc.**
**Yokohama-shi,**
**Kanagawa 226-0022 (JP)**

(74) Representative: **Bagger-Soerensen, Birgitte et al**
**Internationalt Patent-Bureau A/S**
**Rigensgade 11**
**1316 Copenhagen K (DK)**

(56) References cited:
**EP-A1- 0 525 578**
**JP-A- 6 166 731**
**JP-A- 7 216 040**
**JP-A- 7 310 067**
**JP-A- 8 258 172**
**US-A- 5 903 399**
**US-B1- 6 335 079**

EP 1 489 117 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a photocurable resin composition for the formation of lenses, particularly lenses such as Fresnel lenses or lenticular lenses for use in projection televisions and the like, and an optical element comprising said resin composition.

Fresnel lenses have hitherto been produced by pressing, casting or the like. These methods, however, are disadvantageous in that a long time is required for lens preparation and, thus, the productivity is poor. In recent years, studies have been made on the preparation of lenses using ultraviolet-curable resin. Specifically, a lens can be produced in a short time by coating an ultraviolet-curable resin composition onto a lens-shaped mold, placing a transparent resin substrate on the resin composition coating to sandwich the resin composition coating between the transparent resin substrate and the mold, and applying ultraviolet light from the substrate side to cure the resin composition. A recent trend of projection televisions toward a reduction in thickness and an increase in size has led to the requirement that resins for lens formation have various lens characteristics such as increased refractive index and dynamic characteristics. Further, various proposals and studies have been made according to lens service environment.

A Fresnel lens for a projection screen has a construction provided by forming a lens shape using an ionizing radiation curing resin on a plastic substrate. The substrate is preferably formed of a material which is not substantially optically anisotropic and is highly transparent. For example, polymethyl metacrylate (PMMA), a copolymer of metyl metacrylate with styrene (MS), polycarbonate (PC), and transparent olefin resins have hitherto been used as the substrate.

Further, in order to impart impact resistance to the substrate on which the shape of a lens (a cured product of an ionizing radiation-curable resin) is formed, a transparent material having a islands-sea structure formed by blending the above resin with butadiene rubber, acrylic rubber or the like is also often used.

In these plastic substrates, the selection of a proper substrate depending upon applications, properties and cost is very important. Improving the adhesion of the ultraviolet curing resin to the substrate by properly selecting the substrate is also of great significance from the practical point of view. For example, in order to improve the adhesion between the substrate and the ultraviolet curing resin, the substrate may be subjected to surface treatment (such as primer treatment, corona discharge treatment, flame treatment, ultraviolet treatment, or plasma treatment). The surface treatment effect varies depending upon the material. Further, the process and equipment for the surface treatment are also necessary. Therefore, from the viewpoint of production cost, that the lens material per se has good adhesion to the substrate is very effective. To this end, selecting a resin composition having good adhesion to the selected substrate is important from the viewpoint of shortening of a lead time on a mass production level.

In this connection, however, it should be noted that mere excellent adhesion of the ultraviolet curing resin to the substrate does not mean that properties required of the lens could have been satisfied. For example, the Fresnel lens is required to, of course, have optical properties such as refractive index and, in addition, to have vibration-damping properties, which suppress contact friction against the lenticular lens and rigidity or restorability, which can withstand the pressure of contact with the lenticular lens as disclosed in Japanese Patent Laid-Open No. 228549/2001.

Specifically, in general, a combination of a Fresnel lens with a lenticular lens is used in the projection screen. From the viewpoints of maximizing the optical effect and protecting the lens surface, a method is often adopted in which the lenses are brought into intimate contact with each other in such a manner that the surface of one of the lenses faces the surface of the other lens. The Fresnel lens has the function of collimating projected light to vertically correct the light. On the other hand, the lenticular lens has the function of horizontally diffusing the light collimated by the Fresnel lens. In this type of projection screen, in use, the Fresnel lens (circular Fresnel convex lens) on its light outgoing surface side is generally brought into intimate contact with the lenticular lens on its light incident surface side.

In this way, when lens surfaces of optical elements are brought into intimate contact with each other, since both the surfaces have concaves and convexes, the surface shape of one of the optical elements affects the surface shape of the other optical element and vice versa. For example, in the above example, the section of the Fresnel lens surface is in a saw blade-like concave-convex form having a pointed apex, while the section of the lenticular lens surface is in an arch-like concave-convex form which is rounded and raised, for example, is semicircular or semielliptical. When the Fresnel lens sheet having the above sectional form is brought into intimate contact with the lenticular lens sheet having the above sectional form, the raised top of the lenticular lens comes into contact with the pointed apex of the Fresnel lens. In this case, the contact pressure developed at that time causes deformation of the shape of the lenticular lens and/or the shape of the Fresnel lens. That is, the shape of concaves and convexes on the surface of the lens is deformed, resulting in collapsed lens.

In order to avoid this phenomenon, various measures have been taken such as regulation of the modulus of elasticity of the resin or interposition of a slip agent or a slip sheet. Further, silicone has been incorporated in the Fresnel lens resin to improve the friction resistance.

On the other hand, the problem of the deformation of the lens shape can be solved by enhancing the hardness of the resin constituting the lens. Merely enhancing the hardness of the resin, however, disadvantageously renders the resin fragile and leads to a problem of increased susceptibility to breaking of the lens during handling or cutting. For this

reason, the resin constituting the lens should have, on one hand, high hardness and, on the other hand, a certain level of flexibility.

The hardness of the cured product of the resin is generally related to glass transition temperature. When the glass transition temperature is excessively low, the rubber elasticity lowers and, in this case, upon the application of pressure, the resin undergoes plastic deformation. In general, when the resin has a certain level of crosslinking density, rubber elasticity develops even in the case of low glass transition temperature and, in this case, even upon exposure to pressure, plastic deformation does not occur. In the resin composition for an optical element, however, a stiff chain of a benzene ring or an alicyclic group should be introduced into the molecular chain for refractive index improvement which is an essential requirement to be satisfied. This disadvantageously leads to increased glass transition temperature. Therefore, it is very difficult to lower the glass transition temperature to a temperature around room temperature while maintaining the desired refractive index. On the other hand, an excessively high glass transition temperature is advantageous from the viewpoint of improving the refractive index, but on the other hand, the rigidity of the resin becomes so high that the internal stress (strain) is likely to remain unremoved. Therefore, in the case of a lens sheet having a structure comprising a resin composition layer laminated onto a substrate, the relaxation of the lens resin causes warpage of the lens sheet.

On the other hand, when a material containing a halogen compound such as a bromine compound or sulfur is used, the refractive index can be enhanced without use of any aromatic compound such as a compound having a benzene ring and, at the same time, the material properties can be successfully controlled. From the viewpoint of environmental load, however, it is preferred not to use bromine.

Lenses, formed by the photocurable resin composition, for use in projection televisions and the like are required to have properties, for example, optical properties such as high refractive index, excellent restorability and scratch resistance, and good adhesion between the substrate and the cured layer formed from the photocurable resin composition.

On the other hand, in the preparation of lenses, since a resin cured product should be released from the mold, the releasability of the resin cured product from the mold should be high.

At the present time, however, the resin compositions cannot simultaneously satisfy all the above property requirements, and provision of better resin compositions has been desired.

Accordingly, an object of the present invention is to provide a resin composition, which has optical properties such as a high refractive index, has excellent restorability and scratch resistance, and has good adhesion to a substrate, and, when utilized as an optical member (lens) used, for example, in screens for projection televisions or the like, can satisfy various property requirements, and to provide a cured product of the resin composition.

Another object of the present invention is to provide a resin composition which, even when molded into an optical member by a 2P method, does not deteriorate quality characteristics of the optical member and enables the optical member to be easily released from the mold.

## DISCLOSURE OF THE INVENTION

The above object of the present invention is attained by a resin composition comprising: an oligomer component comprising urethane (meth)acrylate, produced by reacting a bisphenol A polyalkoxydiol, an organic diisocyanate and a hydroxyl-containing mono(meth)acrylate, and a bisphenol A epoxy (meth)acrylate; a monomer component comprising a phenoxy polyethylene glycol (meth)acrylate and a bisphenol A polyethoxydiol di(meth)acrylate; and a photopolymerization initiator, said resin composition having a refractive index of not less than 1.55 after resin curing. When an optical member such as a transmission type screen is formed by using a cured product of the resin composition of the present invention as a lens, the optical member has satisfactory front luminance, has optical properties such as high refractive index, has excellent restorability and scratch resistance, and has good adhesion between the substrate and the cured product.

In a preferred embodiment of the present invention, the resin composition contains polyether-modified polydimethylsiloxane as an additive.

In a more preferred embodiment of the present invention, the resin composition according to the present invention further comprises, as an internal release agent, a phosphoric ester represented by formula I or a phosphonic ester represented by formula II:

$$HOP(=O)(OC_nH_{2n+1})_2 \qquad (I)$$

wherein n is an integer of 4 or more; and

$$HOP(=O)(C_nH_{2n+1})(OC_nH_{2n+1}) \qquad (II)$$

wherein n is an integer of 4 or more.

Further, when the concentration of the urethane chain in the urethane oligomer contained in the resin composition is 0.5 to 1.3 mmol/g, the content of the release agent is preferably 0.1 to 0.5% by weight based on the resin composition. When the concentration of urethane chain in the urethane oligomer contained in the resin composition is not less than 0.28 mmol/g and the concentration of OH group contained in the resin composition is 0.41 to 1.2 mmol/g, the content of the release agent is preferably 0.1 to 1.0% by weight based on the resin composition. When the phosphoric ester or phosphonic ester is used as a release agent, even the addition of this additive in combination with polyether-modified polydimethylsiloxane to the resin composition does not adversely affect optical properties and can impart releasability from the metallic mold and slipperiness to the cured product.

In a preferred embodiment of the present invention, the resin composition has a glass transition temperature of 19.5 to 23.7°C and an equilibrium modulus of elasticity at 80°C of 1.08 x $10^8$ to 1.57 x $10^8$ dyne/$cm^2$.

More preferably, the above resin composition satisfies a relationship represented by formula $We > -0.0189E + 34.2$ wherein We represents elastic deformation rate in %; and E represents compression modulus of elasticity in MPa.

The use of this resin can suppress the collapse of lenses caused by mutual compression of the lens surfaces in the projection screen. Specifically, the optical element using the resin composition according to the present invention, even when brought into intimate contact with a warped lenticular lens, does not undergo collapse of the concave/convex parts on its lens surface. In a region of $We \leq -0.0189E + 34.2$, restorability from collapse of the lens surfaces caused by mutual compression is poor.

## BRIEF DESCRIPTION OF THE DRAWINGS

Fig. 1 is a schematic view illustrating a curve for dependency of penetration depth upon load;
Fig. 2 is a schematic view showing an indenter action site;
Fig. 3 is a graph showing a PSD waveform used in a vibration test; and
Fig. 4 is a schematic view illustrating a curve for dependency of penetration depth upon load.

## BEST MODE FOR CARRYING OUT THE INVENTION

The present invention will be described in more detail.

Urethane (meth)acrylate (hereinafter referred to as "component A") as an oligomer component constituting the resin composition of the present invention is produced by reacting a bisphenol A polyalkoxydiol, an organic diisocyanate and a hydroxyl-containing mono(meth)acrylate. By virtue of the incorporation of component A in the resin composition according to the present invention, the restorability of the resin after curing can be improved.

The content of component A is preferably 5 to 60% by weight, particularly preferably 10 to 25% by weight, based on the resin composition.

Specific examples of bisphenol A polyalkoxydiols include bisphenol A polyethoxydiol and bisphenol A polypropoxydiol.

Organic diisocyanates include tolylene diisocyanate, xylylene diisocyanate, isophorone diisocyanate, hexamethylene diisocyanate, and trimethylhexamethylene diisocyanate. Aromatic diisocyanates such as tolylene diisocyanate or xylene diisocyanate are preferred from the viewpoint of refractive index.

Hydroxyl-containing mono(meth)acrylates include 2-hydroxyethyl (meth)acrylate, 2-hydroxypropyl (meth)acrylate, 4-hydroxybutyl (meth)acrylate, polyethylene glycol mono(meth)acrylate, polypropylene glycol mono(meth)acrylate, and 2-hydroxy-3-phenoxypropyl (meth)acrylate. These hydroxyl-containing mono(meth)acrylates may be used either solely or in a combination of two or more.

The urethane (meth)acrylate used in the resin composition according to the present invention can be produced by a conventional procedure. Specifically, the urethane (meth)acrylate is produced by reacting a bisphenol A polyalkoxydiol component with an organic diisocyanate component through a urethanation reaction and then reacting the resultant terminal isocyanate prepolymer with a hydroxyl-containing mono(meth)acrylate component through a (meth)acrylation reaction.

In the urethanation reaction, preferably, one equivalent of the hydroxyl group in the bisphenol A polyalkoxydiol component is reacted with 1.3 to 1.7 equivalents of the isocyanate group in the organic diisocyanate component.

Further, in the (meth)acrylation reaction, preferably, one equivalent of the isocyanate group in the terminal isocyanate urethane prepolymer produced by the above urethanation reaction is reacted with 0.9 to 1.1 equivalents of the hydroxyl group in the hydroxyl-containing mono(meth)acrylate component. The urethanation reaction and the (meth) acrylation reaction are carried out at room temperature to 100°C. These reactions usually proceed in the absence of any catalyst. However, a catalyst may be added, and dibutyltin dilaurate, dibutyltin diacetate and the like may be used

as the catalyst.

More preferably, in the (meth)acrylation reaction, in order to prevent gelation by radical polymerization during the reaction, polymerization inhibitors such as hydroquinone, hydroquinone monomethyl ether, p-methoxy phenol, and p-benzoquinone are added.

The above reaction is preferably allowed to proceed over a satisfactory period of time. When the number average molecular weight of component A is excessively large, the equilibrium modulus of elasticity (crosslinking density) at 80°C is lowered. Therefore, when external force is applied to the cured product of the resin, the external force as such affects the viscose segment. As a result, the cured product of the resin is likely to cause plastic deformation. On the other hand, when the number average molecular weight of component A is excessively small, the molecular chain between crosslink points becomes so rigid that the restorability of the cured product of the resin is less likely to be provided.

Specifically, in the present invention, it was found that an optical element, which has good balance between the level of plastic deformation and the restorability and possesses excellent restorability and scratch resistance, can be provided by using a resin composition having an equilibrium modulus of elasticity in the range of 1.08 x $10^8$ to 1.57 x $10^8$ dyne/$cm^2$ at 80°C. In the resin composition having the above equilibrium modulus of elasticity, the urethane (meth) acrylate component as a constituent of the resin composition preferably has an average molecular weight of 2000 to 8000, particularly preferably 4000 to 6000. The term "average molecular weight" as used herein means number average molecular weight, unless otherwise specified.

The bisphenol A polyalkoxydiol is represented by formula (III):

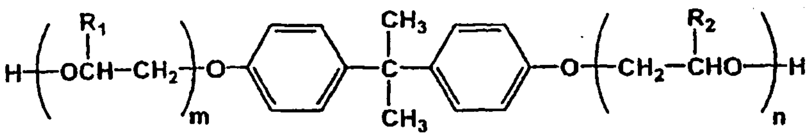 (III)

wherein m and n are an integer; and $R_1$ and $R_2$ each are H or $CH_3$.

The bisphenol A epoxy (meth)acrylate (hereinafter referred to as "component B") constituting the resin composition according to the present invention is a component which is necessary for bringing the refractive index of the cured product of the resin to not less than 1.55. The content of component B is preferably 5 to 50% by weight, particularly preferably 5 to 20% by weight, based on the resin composition. The term "refractive index" as used herein means a refractive index value at 25°C unless otherwise specified.

The bisphenol A epoxy (meth)acrylate is represented by formula (IV):

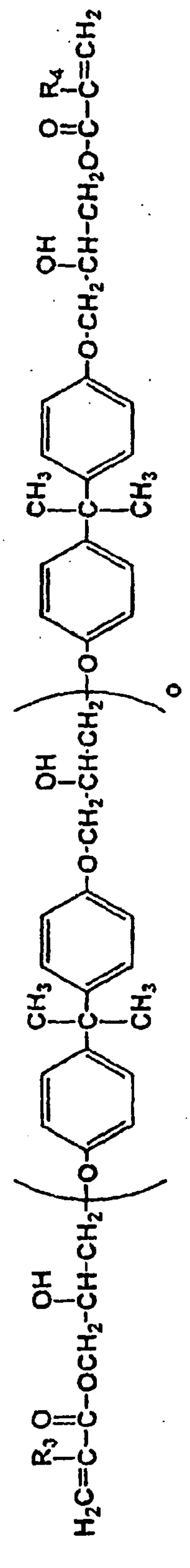

(IV)

wherein o is an integer and more than 1; and $R_3$ and $R_4$ each are H or $CH_3$. When o is less than 1, the hardness of the cured product of the resin composition is so large that the restorability is lowered. Further, in this case, the refractive index is disadvantageously lower than 1.55. The bisphenol A epoxy (meth)acrylate may be produced by a conventional method. Specifically, the bisphenol A epoxy (meth)acrylate may be produced by reacting the bisphenol A epoxy compound with 0.9 to 1.1 equivalents, based on one equivalent of the epoxy group in the bisphenol A epoxy compound, of (meth)acrylic acid in the presence of a catalyst such as a tertiary amino compound, such as dimethyl aminoethyl methacrylate, a mixture of the tertiary amino compound with a quaternary amine, or a mixture of the tertiary amino compound with a quaternary amine salt. The reaction temperature is 50 to 120°C.

The phenoxy polyethylene glycol (meth)acrylate (hereinafter referred to as "component C") constituting the resin composition according to the present invention is a component necessary for maintaining the refractive index of the cured product of the resin at 1.55 or more and for improving the adhesion to the substrate. The content of component C is preferably 10 to 60% by weight, particularly preferably 10 to 35% by weight, based on the resin composition.

In general, a monofunctional monomer is used for modifying viscosity or improving the adhesion to the substrate. A structure of an aliphatic hydrocarbon or an alicyclic hydrocarbon, however, does not provide a satisfactory refractive index. The resin composition according to the present invention contains, as a constituent, phenoxy polyethylene glycol (meth)acrylate having a structure containing an aromatic ring such as a phenoxy group, and, thus, not only the adhesion but also a desired refractive index can be satisfied.

The phenoxy polyethylene glycol (meth)acrylate is represented by formula (V):

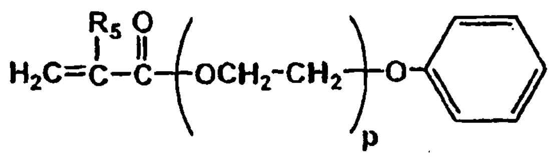

(V)

wherein p is an integer and 1 to 4; and $R_5$ is H or $CH_3$. When p is larger than 4, the refractive index is lowered and, at the same time, the adhesion to the substrate is lowered. Commercially available products may be used as component C. Examples of commercially available products usable herein include Aronix M-101 and Aronix M-102, manufactured by Toa Gosei Chemical Industry Co., Ltd.; NK Ester M-20G, NK Ester M-40G, NK Ester AMP-10G, and NK Ester AMP-20G, manufactured by Shin-Nakamura Chemical Co., Ltd.; KAYARAD R-561 and KAYARAD R-564, manufactured by The Nippon Kayaku Co., Ltd.; Light ester PO, Light Acrylate PO-A, and Light Acrylate P-200A, manufactured by Kyoeisha Chemical Co., Ltd.; Viscoat #192 and Viscoat #193, manufactured by Osaka Organic Chemical Industry Ltd.; and New Frontier PHE and New Frontier PHE-2, manufactured by Dai-Ichi Kogyo Seiyaku Co., Ltd.

Bisphenol A polyethoxydiol di(meth)acrylate (hereinafter referred to as "component D") constituting the resin composition according to the present invention is a component necessary for maintaining a high level of the refractive index and for improving the restorability of the cured product of the resin. The content of component D is preferably 15 to 75% by weight, particularly preferably 30 to 50% by weight, based on the resin composition.

Bisphenol A polyethoxydiol di(meth)acrylate is represented by formula (VI):

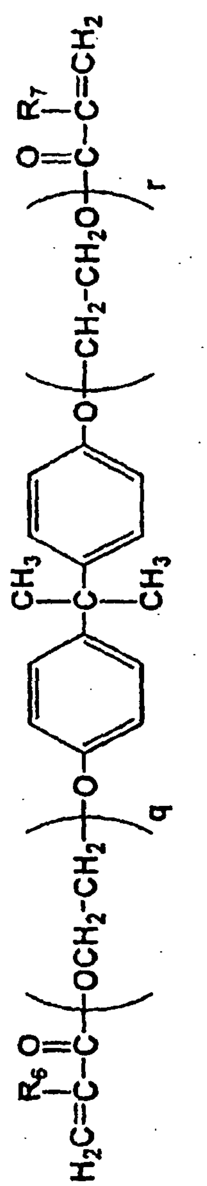

(VI)

wherein q and r are integer; q + r is 6 to 14; and $R_6$ and $R_7$ each are H or $CH_3$. When q + r is less than 6, the hardness of the cured product of the resin is increased and the restorability is lowered. On the other hand, when q + r exceeds 14, the refractive index is disadvantageously smaller than 1.55.

Commercially available products may be used as component D, and examples thereof include: NK Ester BPE-500 and NK Ester A-BPE-10, manufactured by Shin-Nakamura Chemical Co., Ltd.; SR-480 and SR-602, manufactured by SARTOMER; Light Acrylate BP-10EA, manufactured by Kyoeisha Chemical Co., Ltd.; and New Frontier BPE-10 and New Frontier BPEM-10, manufactured by Dai-Ichi Kogyo Seiyaku Co., Ltd.

In the resin composition according to the present invention, compounds (monomer component) containing an (meth)acryloyl or vinyl group other than the above-described component C and component D may be used as an optional component.

Regarding the monomer component, for example, monofuncitonal monomers usable herein include: vinyl monomers such as N-vinyl pyrrolidone, N-vinyl caprolactone, vinyl imidazole, vinylpyridine, and styrene; (meth)acrylic ester monomers and (meth)acrylamide derivatives such as lauryl (meth)acrylate, stearyl (meth)acrylate, butoxyethyl (meth) acrylate, ethoxydiethylene glycol (meth)acrylate, methoxytriethylene glycol (meth)acrylate, methoxypolyethylene glycol (meth)acrylate, methoxydipropylene glycol (meth)acrylate, p-cumyl phenoxyethyl (meth)acrylate, nonyl phenoxypolyethylene glycol (meth)acrylate, tetrahydrofurfuryl (meth)acrylate, isobornyl (meth)acrylate, cyclohexyl (meth)acrylate, benzyl methacrylate, N,N-dimethyl (meth)acrylamide, N,N-dimethyl aminopropyl (meth)acrylate, and acryloyl morpholine.

Polyfunctional monomers include ethylene glycol di(meth)acrylate, diethylene glycol di(meth)acrylate, triethylene glycol di(meth)acrylate, polyethylene glycol di(meth)acrylate, tripropylene glycol tri(meth)acrylate, polytetramethylene glycol di(meth)acrylate, 1,4-butanediol di(meth)acrylate, 1,6-hexanediol di(meth)acrylate, 1,9-nonanediol di(meth) acrylate, 3-methyl-1,5-pentanediol di(meth)acrylate, neopentyl glycol di(meth)acrylate, dimethylol tricyclodecane di (meth)acrylate, hydroxy pivalic acid neopentyl glycol di(meth)acrylate, bisphenol A polypropoxydiol di(meth)acrylate, trimethylolpropane tri(meth)acrylate, ethoxylated trimethylolpropane tri(meth)acrylate, propoxylated trimethylolpropane tri(meth)acrylate, pentaerythritol tri(meth)acrylate, glyceryl tri(meth)acrylate, propoxylated glyceryl tri(meth)acrylate, tris (2-hydroxyethyl)isocyanurate triacrylate, pentaerythritol tetra(meth)acrylate, ditrimethylolpropane tetra(meth)acrylate, dipentaerythritol penta(meth)acrylate, and dipentaerythritol hexa(meth)acrylate.

The content of the photopolymerization initiator (hereinafter referred to as "component E") constituting the resin composition according to the present invention is preferably 0.1 to 15% by weight based on the whole resin composition. When the content of the photopolymerization initiator is less than 0.1% by weight, satisfactory photocurability cannot be provided. On the other hand, when the content of the photopolymerization initiator exceeds 15% by weight, a large amount of the photopolymerization initiator does not contribute to photocuring of the resin composition and is wasteful, leading to increased cost.

Examples of component E include 1-hydroxycylcohexyl phenyl ketone, 2-hydroxy-2-methyl-1-phenylpropan-1-one, 2,2-dimethoxy-1,2-diphenylethan-1-one, 2-benzyl-2-dimethylamino-1-(4-morpholinophenyl)-butanone-1, 2-methyl-1-[4-(methylthio)phenyl]-2-morpholinopropane-1, 2,4,6-trimethylbenzoyldiphenyl phosphine oxide, and phenylbis (2,4,6-trimethylbenzoyl)-phosphine oxide.

The resin composition according to the present invention preferably contains the following additives in addition to components A to E described above. Specifically, silicone, silicone polymer, preferably modified silicone, more preferably polyether-modified polydimethylsiloxane additive may be incorporated in the resin composition. The incorporation of the above additive can improve slipperiness and, when lens sheets are formed by curing the resin composition containing the above additive, the occurrence of scratches on the surface of lenses by friction between the lens sheets can be reduced.

The content of the additive in the whole resin composition is preferably 0.01 to 10% by weight. When the additive content is less than 0.01% by weight, predetermined slipperiness cannot be provided. On the other hand, when the additive content exceeds 10% by weight, the material properties of the resin composition are deteriorated, or the adhesion between the substrate and the resin cured product is deteriorated.

Specific examples of silicones and silicone polymers usable herein include: BYK-307, BYK-333, BYK-332, BYK-331, BYK-345, BYK-348, BYK-370, and BYK-UV 3510, manufactured by Bik-Chemie Japan K.K.; X-22-2404, KF-62-7192, KF-615A, KF-618, KF-353, KF-353A, KF-96, KF-54, KF-56, KF-410, KF-412, HIVACF-4, HIVACF-5, KF-945A, KF-354, and KF-353, manufactured by The Shin-Etsu Chemical Co., Ltd.; SH-28PA, SH-29PA, SH-190, SH-510, SH-550, SH-8410, SH-8421, SYLGARD309, BY16-152, BY16-152B, and BY16-152C, manufactured by Dow Corning Toray Japan Co., Ltd.; FZ-2105, FZ-2165, FZ-2163, L-77, L-7001, L-7002, L-7604, and L-7607, manufactured by Nippon Unicar Co., Ltd.; EFKA-S018, EFKA-3033, EFKA-83, EFKA-3232, EFKA-3236, and EFKA-3239, manufactured by EFKA Additives; and GLANOL 410 manufactured by Kyoeisha Chemical Co., Ltd.

In order to avoid bleedout of the silicone component with the elapse of time upon a change in environment after curing of the resin, a reactive silicone such as silicone acrylate or silicone methacrylate may be used as an auxiliary additive in combination with the above additive. Specific examples of reactive silicones usable herein include: BYK-UV 3500 and BYK-UV 3530, manufactured by Bik-Chemie Japan K.K.; Pentad UV-31 manufactured by Dow Corning; and X-24-8201, X-22-174DX, X-22-2426, X-22-2404, X-22-164A, X-22-164B, and X-22-164C, manufactured by The Shin-Etsu Chemical Co., Ltd.

Preferably, the resin composition according to the present invention further contains a release agent represented by formula VII or VIII.

$$HOP(=O)(OC_nH_{2n+1})_2 \qquad (VII)$$

wherein n is an integer of 4 or more; and

$$HOP(=O)(C_nH_{2n+1})(OC_nH_{2n+1}) \qquad (VIII)$$

wherein n is an integer of 4 or more.

When the resin composition according to the present invention is coated onto the surface of a mold to form a coating which is then cured by ultraviolet light to prepare a lens sheet, the cured product should be separated from the

mold. Since, however, the resin composition according to the present invention contains a polar group such as a hydroxyl group and a polar chain such as a urethane chain, the adhesion between the resin composition and the metallic mold is so high that the separation of the cured product from the mold is difficult. Even when the above silicone additive is contained in the resin composition, particularly in the Fresnel lens, due to its complicated shape of the lens surface, the resin enters the molding part on the surface of the mold and, consequently, the separation of the mold from the lens (cured product) becomes difficult. As described above, increasing the amount of silicone added, the releasability is improved, but on the other hand, a deterioration in material properties of the lens or a deterioration in adhesion to the substrate disadvantageously occurs.

In order to solve the above problem, Japanese Patent Publication No. 20752/1994 and Japanese Patent Laid-Open Nos. 287641/1991 and 43493/1999 disclose an alkoxyalkylphosphoric ester as a release agent for lenses. Further, Japanese Patent Laid-Open No. 57864/1996 discloses an acidic phosphonic acid derivative-type internal release agent.

As described above, however, when the resin composition contains polyether-modified polydimethylsiloxane as a slip agent, the compatibility of the polyether-modified polydimethylsiloxane with the release agent should be taken into consideration. Specifically, even when the content of the release agent and the content of the slip agent in the resin composition are low, both the silicone component and the phosphoric ester component bleed out on the interface of the mold and, in this case, in the interface of the mold, the concentration of the silicone component and the concentration of the release agent are locally increased. When the compatibility of silicone with the release agent is low, in a resin composition state (a liquid state), the resin sometimes has a clouding point, or, in a liquid state, even when the liquid is transparent, after resin curing, the surface of the molded product sometimes becomes cloudy. Further, when the compatibility of the release agent component with the silicone component is low, only releasability is developed and, consequently, the slipperiness and the transparency of the molded product cannot be improved, or conversely, even though the slipperiness is improved, the releasability is unsatisfactory, leading to unfavorable phenomena such as a change in appearance (bleedout of the silicone component) with the elapse of time.

In the present invention, when the phosphoric ester having a structure represented by formula VII or the phosphonic ester having a structure represented by formula VIII is used as an internal release agent, a resin composition, which, even when cured, can maintain the transparency of the cured product and, at the same time, has excellent releasability, can be provided. Specifically, since these internal release agents have satisfactory compatibility with polyether-modified polydimethylsiloxane as the additive necessary for imparting sliperiness, after curing of the resin, even when the release agent and the additive bleed out on the surface of the cured product, the surface of the cured product (molded product) does not become cloudy.

When a lens sheet is prepared by curing and molding a resin compound containing the release agent having a structure represented by formula VII or VIII according to the present invention, the lens sheet, even when stored in a high-temperature and high-humidity environment for a long period of time, does not undergo a change in appearance and is highly stable over time.

The release agent according to the present invention has a structure containing one OH group, that is, a phosphoric diester or phosphonic monoester structure. In an OH group-free phosphoric triester, the compatibility of this release agent with the polyether-modified polydimethylsiloxane is high, but on the other hand, the releasability is not satisfactory. On the other hand, a phosphoric monoester containing two OH groups is advantageous from the viewpoint of the transparency or slipperiness of the resin cured product (lens sheet). This release agent, however, has low compatibility with the polyether-modified polydimethylsiloxane, and, thus, the above-described releasability problem occurs.

In the phosphoric ester and the phosphonic ester as the release agent according to the present invention, the number of carbon atoms in the ester part is 4 or more. When the number of carbon atoms is less than 4, satisfactory releasability cannot be provided. The number of carbon atoms is preferably 8 or more.

In a preferred embodiment of the present invention, the content of the release agent in the present invention is preferably in the range of 0.05 to 5.0% by weight, more preferably 0.1 to 1.0% by weight, based on the resin composition. When the release agent content is less than 0.05% by weight, the releasability is not satisfactory. On the other hand, when the release agent content exceeds 5.0% by weight, the material properties of the molded product is deteriorated.

Regarding the concentration of the urethane chain in the compound contained in the resin composition, when the concentration of urethane chain in the urethane oligomer is 0.5 to 1.3 mmol/g, preferably, the content of the release agent is 0.1 to 0.5% by weight based on the resin composition. Further, when the concentration of urethane chain in the urethane oligomer contained in the resin composition is not less than 0.28 mmol/g and the concentration of OH group contained in the resin composition is 0.41 to 1.2 mmol/g, preferably, the content of the release agent is 0.1 to 1.0% by weight based on the resin composition. The term "concentration of OH group" refers to the proportion of OH group in a bisphenol A epoxy acrylate oligomer or a hydroxy monomer such as hydroxyethyl (meth)acrylate, hydroxypropyl (meth) acrylate, or 2-hydroxy-3-phenoxypropyl (meth)acrylate among the above compounds constituting the composition in the whole resin composition. The term "concentration of urethane chain" refers to the proportion of urethane bond contained in the urethane (meth)acrylate oligomer constituting the resin composition according to the present invention in the whole resin composition.

In the resin composition according to the present invention, the presence of a hydroxyl group and a urethane chain (urethane chain-containing general materials such as urethane acrylate oligomers) in the resin composition is a main cause of the deterioration in releasability from a metallic mold. Even when the concentration of urethane chain is lower than 0.5 mmol/g, the release agent may be contained in the resin composition from the viewpoint of releasability from the mold. In this case, however, for practical purposes, the release agent may be contained in such an amount range that does not sacrifice the material properties of the molded product, that is, in an amount of less than 0.2% by weight, preferably in the range of about 0.05 to 0.2% by weight. In the case of resin molding not using any metallic mold, the use of the release agent is not required. In this case, a coating resin having a large difference in surface energy from that of the resin used in a nonmetallic mold may be used. Further, even when the surface energy difference is small, a fluorine additive or a silicone additive may be added, or alternatively a material containing a fluorine atom or a silicon atom may be used as the resin composition.

When the concentration of the urethane chain in the urethane oligomer is not less than 1.3 mmol/g, the adhesion of the resin composition to the metal is increased. Consequently, the molded product cannot be separated from the mold. Even when the molded product is separated from the mold in an early stage of molding, as the number of times of molding increases to several times to several tens of times, the resin begins to stay on the mold and the residual resin further deteriorates the releasability. In the present invention, the problem of the releasability can be solved by incorporating 0.1 to 0.5% by weight, based on the resin composition, of the release agent represented by formula VII or VIII. When the content of the release agent is less than 0.1% by weight, the releasability cannot be improved. On the other hand, when the content of the release agent exceeds 0.5 % by weight, due to the presence of phosphoric acid or the like, the ester structure of polyester urethane polymer or the like is unfavorably hydrolyzed, leading to lowered viscosity as a result of a lowering in molecular weight which in turn deteriorates the moldability of the resin.

When a nonmetallic resin mold is used as a lens mold, the phosphoric ester release agent may not be contained in the resin composition. When the resin mold contains metallic fine particles, metallic elements or the like, preferably, as with the case of the metallic mold, the above release agent is contained in the resin composition. Even when the nonmetallic mold is used, good releasability can be realized by minimizing surface energy of any one of the mold or the resin composition to maximize the difference in surface energy between the resin composition and the mold. Specifically, for some relationship between the surface energy of the resin composition for lens molding and the surface energy of the mold, the releasability from the mold can be improved by adding a silicon-type slip agent or a fluorine-type additive to the resin composition or by blending a silicon-type or fluorine-type additive with the resin composition.

From the viewpoint of refractive index, the introduction of an aromatic compound rather than the use of an alkyl chain in the ester part is preferred because the refractive index can be enhanced. Since, however, the introduction of the aromatic compound increases the freezing point temperature of the phosphoric ester and the phosphonic ester per se, this method is unfavorable from the viewpoints of storage stability of the resin composition liquid at a low temperature and stability of the molded product stored at a low temperature. Further, in such a state that the release agent has been compatibilized with the polyether-modified polydimethylsiloxane to some extent, the slipperiness is deteriorated under low temperature environment because, in the solidification of the release agent, the silicone component is also solidified, although this phenomenon depends upon the compatibility with the polyether-modified polydimethylsiloxane. In the present invention, the freezing point temperature of the phosphoric ester and the phosphonic ester is preferably about -50°C or below, more preferably -30°C or below, although the preferred freezing point temperature varies depending upon service conditions.

If necessary, the resin composition according to the present invention may contain plasticizers, leveling agents, antifoaming agents, thermal polymerization inhibitors, antioxidants, photostabilizers, solvents and the like.

The resin composition according to the present invention can generally be prepared as a liquid composition by mixing and dissolving components A to E described above and optional other components. The viscosity of the liquid composition is preferably about 500 to 10,000 cps (25°C).

The optical element according to the present invention can be prepared by a conventional method. Specifically, an optical element can be prepared by applying ultraviolet light to the above liquid resin composition, in such a state that the components have been homogeneously dispersed on such a level as homogeneously emulsified without concentration gradient, to cure the resin composition. The homogeneous dispersion of the components can provide an optical element having a high refractive index. For example, the refractive index is preferably not less than 1.55 (25°C). In this case, a lens having high-refractive index optical properties can be prepared using the optical element. The optical element using the resin composition according to the present invention is not always required to have high transparency, so far as it has been prepared by curing the resin composition, in such a state that the components have been homogeneously dispersed, and has light transmittance on a given or higher level. Further, the optical element using the resin composition according to the present invention may have light diffusibility.

The optical element according to the present invention has been prepared by forming, on a transparent resin substrate, a cured product layer, in a lens form, of the resin composition of the present invention. The thickness of the cured product layer is preferably about 10 to 300 μm. Materials for the transparent resin substrate include, for example,

polycarbonate resins, polystyrene resins, polyester resins, polyacrylic resins, or mixtures of these resins. Methods for improving the adherence (adhesion) between the transparent resin substrate and the cured product layer of the resin composition are divided roughly into 5 types, i.e., cleaning treatment, polishing treatment, chemical treatment 1 (treatment in which the surface of the substrate is oxidized and etched to improve the affinity for the composition), active gas treatment, and chemical treatment 2 (treatment in which a compound having affinity for both adhesive and adherend is coated; primer treatment). Among these treatments, the cleaning treatment, the polishing treatment, and the chemical treatment 1 disadvantageously attack the substrate per se, and, thus, the material properties of the substrate per se are possibly influenced. For this reason, these three treatments cannot be utilized without difficulties.

In the case of a member for an optical element, active gas treatment and chemical treatment 2 may be mentioned as the treatment method. For the active gas treatment, the treatment capacity varies depending upon the type of the adhesive and the adherend. Therefore, the versatility is low. Further, immediately after the treatment, bonding should be carried out, because the treatment effect' is sometimes lost. Therefore, the production process is sometimes restricted. On the other hand, chemical treatment 2 suffers from increased production cost and problems of handling such as deposition of refuse and thus cannot be applied to every production process. Further, it should be noted that, although chemical treatment 2 has bonding effect, a compound which has affinity for both the substrate and the resin composition of ultraviolet curing type or the like should be selected in the production process. This is troublesome, and it is difficult to overcome the above problems.

In the resin composition according to the present invention, good adhesion between a substrate and a cured product layer can be realized, without the above special treatment, simply by coating the resin composition directly onto the substrate and curing the coating to form a cured layer. The adhesion of the resin composition according to the present invention to various substrates, for example, polystyrene resin substrates having excellent moistureproof properties (specifically, for example, SX 100 manufactured by Asahi Kasei Corporation, TH 21 manufactured by Denki Kagaku Kogyo K.K., CLEAPACT T1300 manufactured by Dainippon Ink and Chemicals, Inc., and ESTYRENE MS-600 manufactured by Nippon Steel Chemical Co., Ltd) and, in addition, PMMA (polymethyl methacrylate) resin substrates and PC (polycarbonate) resin substrates is excellent.

The lens-shaped molded product according to the present invention may be produced, for example, by coating the resin composition according to the present invention onto a Fresnel lens-shaped mold to form a coating, providing a transparent resin substrate on the coating, and then applying, in this state, an ionizing radiation such as ultraviolet light from a high pressure mercury lamp or the like to the coating from the transparent resin substrate side to cure the resin composition, and then separating the substrate and the cured product from the mold. Thus, for example, a Fresnel lens formed of the cured product having a refractive index of not less than 1.55 (25°C) can generally be produced.

The resin composition according to the present invention is a photocurable ionizing radiation curing-type resin composition. Ionizing radiations usable herein include electromagnetic waves such as visible light, ultraviolet light and X rays, and charged particle beams such as electron beams. Among them, visible light, ultraviolet light, and electron beams are suitable from the practical point of view. In particular, when visible light or ultraviolet light is used, a photopolymerization initiator, which dissociates upon exposure to ultraviolet light or visible light with wavelengths of 1000 to 8000 angstroms to generate radicals, should be used.

When the cured product of the resin composition according to the present invention is used as a member for an optical element, material properties such as compression modulus of elasticity, creep deformation rate and anti-collapse properties, friction resistance at low temperatures, storage modulus, loss tangent, and coefficient of dynamic friction are an important index. At the present time, a mainly adopted projection screen has a structure comprising two types of lenses, i.e., a lenticular lens and a Fresnel lens. This set of lenses is constructed so that the curved (arched) lens on the light incident surface side of the lenticular lens is in contact with the triangular (wedge) lens of the Fresnel lens. Due to this construction, pressure is likely to be applied to a portion between both the lenses, and particularly the shape of the front end part of the lens is likely to be deformed. The reason why such contact pressure is developed is considered as follows. Specifically, separation of the two lenses has an adverse effect on projected images. To prevent the separation of the two lenses, a warped shape is provided in the lenticular lens. In the preparation of the projection screen, this warped lenticular lens is pressed against the counter lens, i.e., Fresnel lens, and, hence, pressure is naturally developed at the portion where the two lenses are in contact with each other. Therefore, the resin for Fresnel lens formation should have material properties on a level high enough to withstand this pressure.

To this end, not only hardness but also countervailing power (creep properties) against the pressure applied to the portion between both the lenses for a long period of time should be taken into consideration. The resin can be evaluated by compression modulus of elasticity and creep deformation rate which can be measured with a microhardness meter.

In the lens sheet comprising the two lenses, the surface of the Fresnel lens, which is one of the lenses, is in such a form that wedges are continuously arranged, while the surface of the other lens, i.e., the lenticular lens, is in such a form that arches are continuously arranged. Due to these shapes of the two lenses, when the two lenses are put on top of each other, the wedge part comes into contact with the arch part. When a combination of these two lenses is

transported, upon exposure to vibration during transportation, the two lenses different from each other in rigidity exhibit different behaviors. Therefore, friction or impact causes deformation or breaking of the tip part (front end part of wedge) of the Fresnel lens, or production of white powder due to shaving of the lens surface.

Further, in the above Fresnel lens, since the resin constituting the lens part generally has a high modulus of elasticity, friction resistance upon a temperature change should be imparted. To this end, a resin material for a screen having such material properties that do not cause lens deformation under various screen service environments, that is, even at high temperatures, and, at the same time, do not cause friction even at low temperatures (0°C) or very low temperatures (-20°C), is desired.

To satisfy these property requirements, in a dynamic viscoelasticity test, the storage modulus (hardness) should be not more than a predetermined value, and amplitude level in a resonant frequency region should be decreased. In other words, the larger the loss tangent (tan $\delta$) as the index of the conversion of vibration energy to thermal energy, the better the vibration damping and the lower the level of friction. Further, slip properties which are effective for shear should also be imparted.

## EXAMPLES

Three resins, i.e., a polymethyl methacrylate resin (PMMA), a polycarbonate resin (PC), and a rubber modified styrene resin (MBS resin) prepared by incorporating a rubberlike elastic body as dispersed particles in a styrene resin having moistureproof properties to impart impact resistance to the styrene resin, were used as substrates. Data on formulations of resin compositions, viscosity of the resin compositions, the adhesion of the resin compositions to the substrates, optical characteristics (refractive index, haze value, and total light transmittance) of the resin compositions, and material properties (compression modulus of elasticity, elastic deformation rate, glass transition temperature, equilibrium modulus of elasticity, and coefficient of dynamic friction) are shown in Table 1 below. Results of evaluation of optical elements using the resin compositions (TV setting collapse test and friction resistance test) are also shown in Table 1. Composition B, composition C, composition F, composition G, and composition H are examples of the present invention, and composition A, composition D, composition E, and composition J are reference examples.

Table 1

| | Example (reference example) | Composition A | Composition B | Composition C | Composition D | Composition E | Composition F | Composition G | Composition H | Composition I | Composition J |
|---|---|---|---|---|---|---|---|---|---|---|---|
| Oligomer | Urethane acrylate A (average molecular weight 3700) *1 | | | | | 16.35 | | | | | |
| | Urethane acrylate B (average molecular weight 4300) *1 | 15.33 | 16.49 | 16.49 | 16.49 | | 16.02 | | | | |
| | Urethane acrylate C (average molecular weight 5300) *1 | | | | | | | 16.02 | | | |
| | Urethane acrylate D (average molecular weight 5400) *1 | | | | | | | | 16.02 | | |
| | Urethane acrylate E (average molecular weight 5500) *1 | | | | | | | | | 16.02 | |
| | Urethane acrylate F (average molecular weight 6200) *1 | | | | | | | | | | 16.02 |
| | Bisphenol A epoxy acrylate (average molecular weight 1900) | 7.66 | 11.35 | 11.35 | 11.35 | 10.58 | 10.68 | 10.68 | 10.68 | 10.68 | 10.68 |
| Monofunctional monomer | Phenoxyethyl acrylate | 31.32 | 19.64 | 19.64 | 19.64 | 16.88 | 18.01 | 18.01 | 18.01 | 18.01 | 18.01 |
| | Phenoxyethyl acrylate (modified with 2 to 3 moles of EO) | 1.92 | 6.79 | 6.79 | 6.79 | 5.77 | 6.8 | 6.8 | 6.8 | 6.8 | 6.8 |
| Bifunctional monomer | Bisphenol A diacrylate(modified with 4 moles of EO) | 5.27 | 1.94 | 4.85 | 7.76 | 5.29 | 4.85 | 4.85 | 4.85 | 4.85 | 4.85 |
| | Bisphenol A diacrylate (modified with 10 moles of EO) | 28.16 | 38.41 | 35.5 | 32.59 | 39.9 | 38.35 | 38.35 | 38.35 | 38.35 | 38.35 |
| Polyfunctional monomer | Trimethylolpropane triacrylate | 2.39 | 0.48 | 0.48 | 0.48 | 0.48 | 0.49 | 0.49 | 0.49 | 0.49 | 0.49 |
| Additive polymer | Styrene-acryl resin (average molecular weight 60,000 to 90,000) | 3.74 | 1.89 | 1.89 | 1.89 | 1.89 | 1.88 | 1.89 | 1.89 | 1.89 | 1.89 |
| Silicone | Polyether-modified polydimethylsiloxane | 1.92 | 0.48 | 0.48 | 0.48 | 0.48 | 0.49 | 0.49 | 0.49 | 0.49 | 0.49 |
| Release agent | | 0.38 | 0.58 | 0.58 | 0.58 | 0.38 | 0.39 | 0.39 | 0.39 | 0.39 | 0.39 |
| Leveling agent | | - | - | - | - | 0.1 | 0.1 | 0.1 | 0.1 | 0.1 | 0.1 |
| Photoinitiator | 1-Hydroxycyclohexyl phenyl ketone | 1.92 | 1.94 | 1.94 | 1.94 | 1.92 | 1.94 | 1.94 | 1.94 | 1.94 | 1.94 |
| Basic properties of resin | Viscosity (MPa·s/40°C) | 2010 | 1940 | 2070 | 2170 | 2060 | 1890 | 2060 | 2050 | 2060 | 2070 |
| | Refractive index (after curing/25°C) | 1.552 | 1.551 | 1.552 | 1.553 | 1.552 | 1.552 | 1.553 | 1.553 | 1.553 | 1.552 |
| | HAZE (Δ) | 0.4 | 0.3 | 0.3 | 0.5 | 0.5 | 0.3 | 0.5 | 0.4 | 0.5 | 0.4 |
| | Total light transmittance (%) | 92.4 | 92.0 | 92.1 | 92.2 | 92.2 | 92.0 | 92.2 | 92.2 | 92.2 | 92.1 |
| | Adhesion to PMMA substrate (1 mm cross-cut) | 100/100 | 100/100 | 100/100 | 100/100 | 100/100 | 100/100 | 100/100 | 100/100 | 100/100 | 100/100 |
| | Adhesion to MS substrate (1 mm cross-cut) | 100/100 | 100/100 | 100/100 | 100/100 | 98/100 | 98/100 | 100/100 | 100/100 | 100/100 | 100/100 |
| | Adhesion to PC substrate (1 mm cross-cut) | 100/100 | 100/100 | 100/100 | 100/100 | 100/100 | 100/100 | 100/100 | 100/100 | 100/100 | 100/100 |
| Properties of material | Compression modulus of elasticity (MPa) | 190.0 | 136.3 | 118.8 | 148.7 | 263.4 | 112.9 | 151.4 | 181.4 | 162.8 | 156.0 |
| | Elastic deformation rate (%) | 38.3 | 47.7 | 44.7 | 31.4 | 30.0 | 45.4 | 43.7 | 38.5 | 41.2 | 41.4 |
| DMA measurement (1 Hz) | Tg (°C): tan δ maximum temp. | 24.7 | 19.5 | 22.9 | 23.7 | 22.8 | 22.2 | 23.7 | 23.7 | 22.7 | 22.2 |
| | Equilibrium modulus of elasticity ($dyne/cm^2$): storage modulus at 80°C | 6.69E + 07 | 1.13E + 08 | 1.16E + 08 | 9.47E + 07 | 8.86E + 07 | 1.55E + 08 | 1.11E + 08 | 1.20E + 08 | 1.57E + 08 | 8.46E + 07 |
| Coefficient of dynamic friction | | 1.20E + 01 | 1.00E + 01 | 1.00E + 01 | 1.40E + 01 | 1.40E + 01 | 1.30E + 01 | 7.00E + 02 | 1.20E + 01 | 1.00E + 01 | 1.50E + 01 |
| TV setting collapse test | | B | A | A | B | C | A | A | A | A | C |
| Friction resistance (PSD waveform random vibration test at -20°C) | | C | A | A | C | B | A | A | A | A | C |

*1: Urethane acrylate prepared by reacting tolylene diisocyanate, bisphenol A tetrapropoxydiol, polyethylene glycol monoacrylate, and 2-hydroxyethyl acrylate with one another.

The above evaluations and measurements were carried out by the following methods.

Viscosity of ink

The viscosity of the resin compositions was measured based on the Brookfield type viscometer method specified in JIS K 5400. In this measurement, a BL type viscometer (rotor number: 3) manufactured by Tokyo Keiki Co., Ltd. was used, and the indicated value of the viscometer was measured one min after the start of rotation under conditions of 40°C and 12 rpm. A value obtained by multiplying the measured indicated value of the viscometer by a conversion multiplier (100 for this condition) was regarded as the viscosity.

Refractive index

Cured sheets prepared in the same manner as in the samples for dynamic viscoelasticity measurement described below were provided as samples. Each of the samples was brought into intimate contact with an Abbe's refractometer in its prism part using 1-bromonaphthalene, and the refractive index was measured with D line ($\lambda$ = 589 nm) at a sample temperature of 25°C. (For others, the measurement was done according to JIS K 7105.)

Haze value and total light transmittance

Diffuse transmittance $T_d$ and total light transmittance Ti were measured with an integrating sphere-type light transmittance measuring device according to JIS K 7150, and a percentage ratio of $T_d$ to $T_i$ was determined as a haze value.

Adhesion to substrate

The adhesion between the substrate and the resin composition was evaluated as follows. Each resin composition shown in Table 1 was coated onto the surface of a mold for Fresnel lens formation by a predetermined method. The MBS resin substrate was provided on the coating to sandwich the resin composition between the mold and the substrate, and the substrate was pressed so that the coating thickness was made uniform. Ultraviolet light was then applied from the substrate side to cure the resin composition, thereby forming a cured layer. Thereafter, the cured layer and the substrate (which constitute sheet-like lens) are separated from the mold to prepare a sheet-like lens. (In this connection, it should be noted that, in curing the resin compositions, for all the resin compositions, a photoinitiator was added in an identical amount under identical conditions, although this is not described in each composition indicated in Table 1.)

In order to evaluate the adhesion between the resin composition (cured layer) and the MBS resin substrate from the separation surface side of the sheet-like lens prepared above, a cross-cut peeling test was carried out according to JIS K 5400.

The score was determined by calculating the proportion of adhered cross-cuts (X) to 100 cross-cuts (size of one square: 1 mm x 1 mm), that is, X/100.

Preparation of samples for measurement of dynamic viscoelasticity

Samples for the measurement of storage modulus and equilibrium modulus of elasticity as dynamic viscoelasticity were prepared as follows. A stainless steel plate having a flat surface and controlled at 40 to 42°C was provided as a mold. Each resin composition regulated to 40 to 42°C was coated to a thickness of 200 $\mu$m onto the surface of the mold. Light was applied from a metal halide-type ultraviolet light lamp (manufactured by Japan Storage Battery Co., Ltd.) to the coating under conditions of integrated quantity of light 2000 $mJ/cm^2$ and peak illumination 250 $mW/cm^2$ to cure the resin composition. Thereafter, the cured sheet was separated. Thus, sheets for samples were prepared.

Preparation of samples for measurement of compression modulus of elasticity

Sheets for samples in a Fresnel lens form for the measurement of compression modulus of elasticity were prepared in the same manner as in the preparation of the samples for the measurement of dynamic viscoelasticity, except that a nickel mold having a surface shape which is the reverse of the shape of a Fresnel lens was used instead of the stainless steel plate having a flat surface.

Measurement of dynamic viscoelasticity

The samples thus obtained were molded into strips having a size of 30 mm x 3 mm x 0.2 mm. 0.05% load strain was applied to the samples with a dynamic viscoelasticity measuring device ("RHEOVIBRON," manufactured by Orientec Co., Ltd.), and the storage modulus and the loss tangent were measured. In the measurement, the frequency was 1 to 10 Hz, and the temperature range was -100 to 100°C (temperature rise rate 3°C/min). A curve for the dependency of storage modulus upon temperature and a curve for the dependency of loss tangent upon temperature were prepared using the measured data.

The storage modulus at 25°C (room temperature), 0°C, and -20°C was determined from the curve for the dependency of storage modulus upon temperature. Separately, a curve for the dependency of storage modulus upon temperature was prepared in the same manner as described just above, except that the frequency of force vibration was 1 Hz. The storage modulus at 80°C was determined as an equilibrium modulus of elasticity from the curve for the dependency of storage modulus upon temperature.

Further, the loss tangent at 25°C (room temperature), 0°C, and -20°C was determined from the curve for the dependency of loss tangent upon temperature.

The temperature in a peak position at 1 Hz of the loss tangent (tan $\delta$) was regarded as the glass transition temperature.

Measurement of coefficient of dynamic friction

Samples for the measurement of coefficient of dynamic friction were prepared in the same manner as in the preparation of the samples for the measurement of dynamic viscoelasticity, except that the thickness of the coating was 100 $\mu$m and, in the ultraviolet irradiation, the coating was covered with an acrylic plate. In the measurement, a surface property measuring device (HEIDON TRIBOGEAR TYPE: 14DR, manufactured by Shinto Scientific Company Ltd.) was used. A vertical load (a point pressure of 100 g) was applied with a ball indenter to the surface of the samples, and the ball indenter was slid on the surface of the sample at a speed of 300 mm/min to measure the coefficient of dynamic friction. The measurement was done five times, and the average of the measured values was regarded as the coefficient of dynamic friction.

Measurement of compression modulus of elasticity

A universal hardness test using an ultramicrohardness meter (H-100V, manufactured by Fischer, Germany) was applied to calculate the compression modulus of elasticity. Specifically, the load applied by an indenter was gradually increased to a predetermined value and was then gradually decreased to prepare a curve for the dependency of penetration depth upon load, and the results of the measurement were analyzed to calculate the compression modulus of elasticity. The indenter used was a tungsten carbide (WC) ball indenter having a diameter of 0.4 mm.

The curve for the dependency of penetration depth upon load is typically as shown in Fig. 1. At the outset, upon a gradual increase in load from load 0 (point a) to load f, deformation occurs, and the penetration depth of the indenter gradually increases. When increasing the load is stopped at a certain load value, penetration caused by plastic deformation is stopped (point b). Thereafter, the load value is allowed to remain unchanged, during which time the penetration depth continues to increase due to creep deformation and reaches point c which stops the retention of the load value. Thereafter, as the load is gradually decreased, the penetration depth decreases toward point d due to elastic deformation.

In this case, the maximum load value F, which is the load value at point b in Fig. 1, was set to 20 mN. The reason for this is as follows. In an actual projection screen, the pressure of contact between the Fresnel lens sheet and the lenticular lens sheet is difficult to measure. However, when the deformation level of the lens constituting the screen is about 10 $\mu$m on the outer peripheral part of the lens sheet which should satisfy a strict requirement, this deformation is acceptable from the viewpoint of lens performance. For this reason, since the load required for the conventional lens sheet to be deformed by 10 $\mu$m is about 20 mN, 20 mN was used as the maximum load value. The time for creep deformation was arbitrarily brought to 60 sec.

The procedure for determining the curve for the dependency of penetration depth upon load is as follows.

(1) The load value for compression is increased from 0 (zero) to 20 mN in 100 steps every 0.1 sec.
(2) The load value increased to 20 mN is maintained for 60 sec to cause creep deformation.
(3) The load value is decreased to 0.4 mN (lowest load in the tester) in 40 steps every 0.1 sec.
(4) The load value 0.4 mN is maintained for 60 sec to recover the penetration depth.
(5) The above steps (1) to (4) are repeated three times.

As shown in Fig. 2, the site on which the ball indenter is allowed to act is preferably around the center part in individual segmented lens surfaces constituting the Fresnel lens 2, for example, the center part in parts as indicated by 2c, 2c', and 2c". When the spacing between adjacent concaves in the lens surface is pitch P, the center part is around a position corresponding to P/2. Also in the case of other lens shapes, the ball indenter is preferably allowed to act on a position around the center of individual lens surfaces constituting the lenses.

The compression modulus of elasticity (E) was determined by the following equation.

$$E = 1/(2(hr(2R - hr))^{1/2} \times H \times (\Delta H/\Delta f) - (1\text{-}n)/e)$$

wherein

"hr" represents penetration depth at an intersection of a tangential line with a penetration depth axis (an abscissa) in a curve, for the dependency of penetration depth upon load, in its load reduction zone when load f is a maximum value F (unit: mm);
"R" represents the radius (2R = 0.4 mm) of the ball indenter;
"H" represents the maximum value of penetration depth h (unit: mm);
"$\Delta H/\Delta f$"" represents the reciprocal of the slope of a curve, for the dependency of penetration depth upon load, in its load reduction zone when load f is a maximum value F;
"n" represents the Poisson's ratio of the material (WC) of the ball indenter (n = 0.22); and
"e" represents the modulus of elasticity of the material (WC) of the ball indenter ($e = 5.3 \times 10^5$ N/mm$^2$).

As described above, increase/decrease of load and the like were repeated three times in the order of steps (1), (2), (3), and (4). In this case, for each time of repetition, a curve for the dependency of penetration depth upon load was determined, and, based on each of the curves, the compression modulus of elasticity (E) (unit: MPa) was determined, and the average of the values was regarded as the compression modulus of elasticity.

Creep deformation rate

The creep deformation rate (C) was determined by the following equation.

$$C = (h2 - h1) \cdot 100/h1$$

wherein h1 represents penetration depth when the load reaches a given testing load (20 mN in this case) (point b in Fig. 2) (unit: mm); and h2 represents penetration depth after a predetermined period of time (60 sec) has elapsed while holding the testing load (point c in Fig. 2) (unit: mm).

Elastic deformation rate

Fig. 4 is a graph showing a curve for the dependency of penetration depth upon load. The elastic deformation rate is the proportion of elastic deformation energy to total load energy and can be determined from the curve for the dependency of penetration depth upon load shown in Fig. 4. In Fig. 4,

A: initial state,
B: application of maximum load and maximum deformation,
B-C: creep deformation level,
D: after removal of load (to lowest load),
D-E: creep deformation level under lowest load,
E-A: residual deformation level, and
$h_{max}$-E: restored deformation level. In this case, the elastic deformation rate ($\eta e$) can be expressed by

$$\eta e = W_{elastic}/W_{total}$$

wherein

$$W_{total} = \int F1(h)dh,$$

and

$$W_{elastic} = \int F2(h)dh.$$

TV setting collapse test

Fresnel lens sheets prepared by molding using the same resin compositions as those used for the measurement of the above compression modulus of elasticity (E) and the creep deformation rate (C) were placed so as to face a predetermined lenticular lens sheet, and the four sides of the assemblies were fixed by a tape, and the fixed assemblies were fitted into wood frames of individual television sizes, followed by mounting on televisions to visually observe and evaluate a white screen. After the elapse of one hr, when collapse of the Fresnel lens sheet was observed, the lens sheet was evaluated as "A," and, when collapse was not observed, the lens sheet was evaluated as "B."

Friction resistance test

A Fresnel lens sheet was brought into intimate contact with a lenticular lens sheet so that the lens surface in the Fresnel lens sheet faced the lens surface in the lenticular lens sheet. The four sides of the assembly were fixed by a pressure-sensitive adhesive tape, and the mixed assembly was fitted into a wood frame of TV screen size. This was set in a vibration tester (EDS 252, a vibration tester, manufactured by Akashi Corporation) installed within an environment test chamber kept at a constant temperature. Random waves having PSD (power spectrum density) waveform shown in Fig. 3 were used for vibration, and a vibration test corresponding to truck transportation of 5000 km was carried out by 10 cycles in the case of a temperature of 25°C, by 5 cycles in the case of a temperature of 0°C, and by 3 cycles in the case of a temperature of -20°C. In these cases, 1 cycle was 4320 sec.

The random wave is an indefinite wave having statistic properties which can be expressed by PSD function, and, in this vibration test, test conditions are determined using the function as an index. The reason why the random wave is used is that nonlinear elements of the vibration can be eliminated, that is, nonlinear elements by mounting of a projection screen, a packing form and the like can be eliminated, and the vibration of the object can be added under given conditions. Further, all the vibrations are different in any point of time base with the test start time being 0 (zero). Therefore, conditions which are closer to vibrations during actual transportation can be produced.

25°C (room temperature), 0°C, and -20°C were used as environmental temperatures. After the completion of the test, a screen of which the whole is white was projected by a projector to inspect the screen for uneven brightness. In this case, when uneven brightness attributable to friction between lenses was clearly observed, the lens sheet was evaluated as "C"; when uneven brightness was observed on a level that is inconspicuous, the lens sheet was evaluated as "B"; and, when uneven brightness was not observed, the lens sheet was evaluated as "A".

In Table 1, for example, composition F, composition H, and composition J are compared with one another, the number average molecular weight of urethane (meth)acrylate used is increased in this order and the equilibrium modulus of elasticity at 80°C is decreased in this order. For composition J, the equilibrium modulus of elasticity is lower than 1.08 x $10^8$ dyne/$cm^2$, plastic deformation is likely to be caused by external force, and the results of the TV setting collapse test and the friction resistance test are poor.

For Comparative Examples 1 to 9 in which the formulation of the resin composition was varied, data on formulations of resin compositions are shown in Table 2, and data on viscosity of the resin compositions, optical characteristics (refractive index, total light transmittance, and haze value) of cured products of resins, the adhesion of the resin compositions to the substrates, and material properties (compression modulus of elasticity, elastic deformation rate, glass transition temperature, equilibrium modulus of elasticity, and coefficient of dynamic friction) are shown in Table 3.

For individual data, the measuring method, conditions and the like are the same as those indicated in Table 1.

Table 2: Formulations of resin compositions used in Examples and Comparative Examples

| | | Ex. (composition I) | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|
| UV resin | Urethane acrylate (average molecular weight 5500) *1 | 16.02 | - | - | - | - | - | - | - | - | - |
| | Bisphenol A epoxy acrylate- (average molecular weight 1900) | 10.68 | 10.68 | - | - | - | 26.70 | 10.68 | 10.68 | 10.68 | 10.68 |
| | Bisphenol A epoxy acrylate (average molecular weight 500) | - | - | - | 10.68 | - | - | - | - | - | - |
| | Phenoxyethyl acrylate | 18.01 | 18.01 | 18.01 | 18.01 | 18.01 | 18.01 | 8.99 | 8.99 | 18.01 | 18.01 |
| | Phenoxyethyl acrylate (modified with 2 to 3 moles of EO) | 6.80 | 6.80 | 6.80 | 6.80 | 6.80 | 6.80 | - | - | 6.80 | 6.80 |
| | Phenoxyethyl acrylate (modified with 5 to 6 moles of EO) | - | - | - | - | - | - | - | 15.82 | - | - |
| | Bisphenol A diacrylate (modified with 4 moles of EO) | 4.85 | 4.85 | 4.85 | 4.85 | 4.85 | 4.85 | 4.85 | 4.85 | 4.85 | 36.79 |
| | Bisphenol A diacrylate (modified with 10 moles of EO) . | 38.35 | 38.35 | 38.35 | 38.35 | 38.35 | 38.35 | 38.35 | 38.35 | 6.41 | 6.41 |
| | Trimethylolpropane triacrylate | 0.49 | 0.49 | 0.49 | 0.49 | 0.49 | 0.49 | 0.49 | 0.49 | 0.49 | 0.49 |

(continued)

| | | Ex. (composition I) | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|
| Non-UV resin | Styrene-acryl resin (average molecular weight 60,000 to 90,000) | 1.89 | 1.89 | 1.89 | 1.89 | 1.89 | 1.89 | 1.89 | 1.89 | 1.89 | 1.89 |
| Silicone | Polyether-modified polydimethylsiloxane | 0.49 | 0.41 | 0.44 | 0.49 | 0.49 | 0.49 | 0.41 | 0.49 | 0.33 | 0.49 |
| Release agent | | 0.39 | 0.33 | 0.35 | 0.39 | 0.39 | 0.39 | 0.33 | 0.39 | 0.26 | 0.39 |
| Leveling agent | | 0.10 | 0.08 | 0.09 | 0.10 | 0.10 | 0.10 | 0.08 | 0.10 | 0.07 | 0.10 |
| Photoinitiator | | 1.94 | 1.61 | 1.72 | 1.94 | 1.94 | 1.94 | 1.61 | 1.94 | 1.29 | 1.94 |
| Total of UV resins | | 95.2 | 79.18 | 84.52 | 95.20 | 95.20 | 95.20 | 79.38 | 95.20 | 63.26 | 95.20 |
| Total of non-UV resins | | 1.89 | 1.89 | 1.89 | 1.89 | 1.89 | 1.89 | 1.89 | 1.89 | 1.89 | 1.89 |
| Total of additives | | 0.98 | 0.82 | 0.88 | 0.98 | 0.98 | 0.98 | 0.82 | 0.98 | 0.66 | 0.98 |
| Total (wt%) | | 100.01 | 83.50 | 89.01 | 100.01 | 100.01 | 100.01 | 83.70 | 100.01 | 67.10 | 100.01 |
| Silicone content (wt%) | | 0.50 | 0.51 | 0.51 | 0.50 | 0.50 | 0.50 | 0.50 | 0.50 | 0.51 | 0.50 |
| Release agent content (wt%) | | 0.40 | 0.41 | 0.41 | 0.40 | 0.40 | 0.40 | 0.41 | 0.40 | 0.40 | 0.40 |
| Leveling agent content (wt%) | | 0.10 | 0.10 | 0.10 | 0.10 | 0.10 | 0.10 | 0.10 | 0.10 | 0.11 | 0.10 |

(continued)

| | Ex. (composition I) | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|
| Initiator content (wt%): content based on UV resins | 2.04 | 2.03 | 2.04 | 2.04 | 2.04 | 2.04 | 2.03 | 2.04 | 2.04 | 2.04 |

*1: Urethane acrylate prepared by reacting tolylene diisocyanate, bisphenol A tetrapropoxydiol, polyethylene glycol monoacrylate, and 2-hydroxyethyl acrylate with one another.

Comp. Ex. 1: Same composition as Composition I except that urethane acrylate was absent.

Comp. Ex. 2: Same composition as Composition I except that epoxy acrylate was absent.

Comp. Ex. 3: Same composition as Composition I except that the molecular weight of epoxy acrylate was changed to 500.

Comp. Ex. 4: Same composition as Composition I except that urethane acrylate was used instead of epoxy acrylate.

Comp. Ex. 5: Same composition as Composition I except that epoxyacrylate was used instead of urethane acrylate.

Comp. Ex. 6: Same composition as Composition I except that phenoxyethyl acrylate modified with EO Was absent and the amount of phenoxyethyl acrylate was reduced.

Comp. Ex. 7: Same composition as Composition I except that phenoxyethyl acrylate (modified with 5 to 6 moles of EO) was used instead of phenoxyethy acrylate.

Comp. Ex. 8: Same composition as Composition I except that bisphenol A diacrylate (modified with 10 moles of EO) was absent.

Comp. Ex. 9: Same composition as Composition I except that bisphenol A diacrylate (modified with 4 moles of EO) was used instead of bisphenol A diacrylate (modified with 10. moles of EO),

Table 3: Evaluation results

| | | Ex. (composition I) | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|
| Basic properties of resin | Viscosity (MPa·s/40°C) | 2010 | 450 | 730 | 1030 | 1790 | 2230 | 8250 | 2480 | 4450 | 1920 |
| | Refractive index (after curing/25°C) | 1.552 | 1.551 | 1.546 | 1.549 | 1.547 | 1.558 | 1.552 | 1.545 | 1.559 | 1.562 |
| | Total light transmittance (%) | 92.2 | 92.3 | 92.1 | 92.2 | 92.4 | 91.9 | 93.2 | 92.5 | 91.9 | 91.7 |
| | HAZE (Δ) | 0.5 | 0.7 | 1.3 | 0.5 | 0.8 | 0.7 | 2.9 | 0.8 | 0.7 | 0.5 |
| Adhesion | Adhesion to PMMA substrate (1 mm cross-cut) | 100/100 | 100/100 | 100/100 | 100/100 | 100/100 | 100/100 | 0/100 | 0/100 | 100/100 | 100/100 |
| | Adhesion to MS substrate (1 mm cross-cut) | 100/100 | 100/100 | 100/100 | 100/100 | 100/100 | 95/100 | 40/100 | 100/100 | 100/100 | 80/100 |
| | Adhesion to PC substrate (1 mm cross-cut) | 100/100 | 100/100 | 100/100 | 100/100 | 100/100 | 100/100 | 95/100 | 100/100 | 100/100 | 100/100 |
| Properties of material | Compression modulus of elasticity (MPa) | 162.8 | 138.4 | 128.0 | 246.9 | 138.0 | 232.3 | 521.3 | 131.8 | 1017.5 | 4530.0 |
| | Elastic deformation rate (%) | 41.2 | 63.70 | 61.70 | 34.90 | 47.00 | 29.40 | 20.40 | 60.20 | 11.80 | 60.25 |
| Dynamic viscoelasticity | Tg (°C): tan δ maximum temp. | 22.7 | 18.0 | 17.7 | 24.7 | 22.5 | 26.3 | 30.6 | 15.2 | 32.2 | 41.0 |
| | Storage modulus ($dyne/cm^2$): 1 Hz, 80°C | 1.57E + 08 | 1.72E + 08 | 2.04E + 08 | 2.04E + 08 | 1.54E + 08 | 1.63E + 08 | 1.80E + 08 | 1.68E + 08 | 6.64E + 07 | 1.90E + 08 |

As is apparent from the results shown in Table 2, cured products formed of resin compositions of compositions A to J of Examples have a refractive index of not less than 1.55, a glass transition temperature of 19.5 to 23.7°C and an equilibrium modulus of elasticity at 80°C of $1.08 \times 10^8$ to $1.57 \times 10^8$ dyne/$cm^2$. Further, they satisfy a relationship represented by formula We > -0.0189E + 34.2 wherein We represents elastic deformation rate in %; and E represents compression modulus of elasticity in MPa. Further, in Examples, from Table 2, it is apparent that the adhesion to the substrate is excellent.

On the other hand, for the resin composition not containing urethane (meth)acrylate (component A) in Comparative Example 1, it is apparent that the glass transition temperature is below 19.5°C, and the equilibrium modulus of elasticity is more than $1.57 \times 10^8$ dynes/$cm^2$ at 80°C. That is, the power with respect to the elastic deformation increases, and the restorability is excellent. Since, however, the viscosity is much lower than the predetermined value, a problem with moldability occurs.

For the resin composition not containing bisphenol A epoxy (meth)acrylate (component B) in Comparative Example 2, it is apparent that the glass transition temperature is below 19.5°C, and the equilibrium modulus of elasticity is more than $1.57 \times 10^8$ dynes/$cm^2$ at 80°C. That is, the power with respect to the elastic deformation increases, and the restorability is excellent. Since, however, the viscosity of the resin composition is low, a problem with moldability occurs. Further, the refractive index is less than 1.55, and, thus, the resin composition does not have properties required of the optical element.

The resin composition of Comparative Example 3, in which the average molecular weight of bisphenol A epoxy (meth)acrylate (component B) is changed from 2100 to 500, has a refractive index of slightly lower than 1.55, a glass transition temperature above 23.7°C, and an equilibrium modulus of elasticity of more than $1.57 \times 10^8$ dynes/$cm^2$ at 80°C.

For the resin composition of Comparative Example 4 in which urethane (meth)acrylate (component A) is used instead of bisphenol A epoxy (meth)acrylate (component B), the refractive index is lower than 1.55.

The resin composition of Comparative Example 5, in which bisphenol A epoxy (meth)acrylate (component B) is used instead of urethane (meth)acrylate (component A), has a glass transition temperature above 23.7°C, and an equilibrium modulus of elasticity of more than 1.57 x $10^8$ dynes/$cm^2$ at 80°C. Further, the adhesion to the MS substrate is poor.

The resin composition of Comparative Example 6, in which the content of phenoxy polyethylene glycol (meth) acrylate (component C) is decreased, has a glass transition temperature above 23.7°C and an equilibrium modulus of elasticity at 80°C of more than 1.57 x $10^8$ dynes/$cm^2$ and is poor in adhesion to both the PMMA substrate and the MS substrate. Further, the viscosity of the resin composition is extraordinarily high.

The resin composition of Comparative Example 7, in which phenoxyethyl acrylate modified with 5 to 6 moles of ethylene oxide is used instead of phenoxyethyl acrylate, has a glass transition temperature below 19.5°C and an equilibrium modulus of elasticity at 80°C of more than 1.57 x $10^8$ dynes/$cm^2$, that is, has enhanced restorability, but on the other hand, the refractive index is small and the adhesion to the PMMA substrate is also poor.

The resin composition of Comparative Example 8, which does not contain bisphenol A diacrylate modified with 10 moles in total on average of ethylene oxide, has high viscosity, a glass transition temperature above 23.7°C and a storage modulus of less than 1.08 x $10^8$ dynes/$cm^2$ at 80°C.

The resin composition of Comparative Example 9 in which bisphenol A diacrylate modified with 4 moles in total on average of ethylene oxide is used instead of bisphenol A diacrylate modified with 10 moles in total on average of ethylene oxide has a glass transition temperature above 23.7°C and an equilibrium modulus of elasticity at 80°C of more than 1.57 x $10^8$ dynes/$cm^2$ and possesses poor adhesion to the MS substrate. This demonstrates that the resin composition of Comparative Example 9 is not a material possessing excellent restorability but a material which has a high level of energy elasticity and is a rigid material.

Examples 1 to 3 and Comparative Examples 10 to 12

A sheet-like lens was prepared in the same manner as described above, except that 0.4% by weight of a release agent as shown in Table 4 and additives, i.e., 0.5% by weight of a polyether-modified polydimethylsiloxane (L-7001, manufactured by Nippon Unicar Co., Ltd.) and 0.1% by weight of a fluorine leveling agent (Megafac F-470, manufactured by Dainippon Ink and Chemicals, Inc.), were added to the resin composition indicated as composition B shown in Table 1. In order to examine the compatibility of each release agent with polyether-modified polydimethylsiloxane, the state of a mixed solution composed of the release agent and polyether-modified polydimethylsiloxane in a ratio of 1 : 1 was visually evaluated. When the solution was transparent, the compatibility was evaluated as "A", while, when the solution was clouded or in a separated state, the compatibility was evaluated as "B". Further, the fluidity of the mixed solution at -10°C was examined. The mixed solution was placed as a sample in a glass bottle and stored at -10°C. The glass bottle containing the sample of -10°C was inclined by 90 degrees. In this case, when the sample was immediately flowed (the sample was clearly in a liquid state), the fluidity was evaluated as "A", while, when sample was not fluid and solid or waxy, the fluidity was evaluated as "B".

Evaluation was carried out for the releasablity of the sheet-like lens from a mold at the time of the preparation of the sheet-like lens, the transmittance of the sheet lens, and the haze value of the sheet lens. Further, the lens sheets thus obtained were subjected to an acceleration test. Specifically, the lens sheets were held under conditions of 60°C and 95% RH for 168 hr and were then evaluated for the transmittance, haze value, and lens surface state of the lens sheets. Further, the lens sheets were subjected to a vibration test at -20°C in the same manner as described above. The results are shown in Table 5.

For Examples 1 to 3, the releasability from the mold was excellent, and the lens sheets had high transparency and further were highly stable over time.

On the other hand, the lens sheet prepared in Comparative Example 10 had poor releasability, could not maintain the transparency in a high-temperature and high-humidity environment and was poor in stability over time. The lens sheet prepared in Comparative Example 11 was highly stable over time in a high-temperature and high-humidity environment but had poor releasability. The lens sheet prepared in Comparative Example 12 was highly stable over time in a high-temperature and high-humidity environment but had an unsatisfactory level of releasability due to short chain length (n = 4) of the alkyl group in the phosphoric ester used.

Table 4: Various properties of phosphoric esters and phosphonic esters, and compatibility of these esters with polydimethylsiloxane

| Sample | Chemical formula | Viscosity (25°C) (MPa·s) | Freezing point (°C) | Compatibility | Fluidity at -10°C |
|---|---|---|---|---|---|
| Ex. 1 | $HOP(=O)(OC_8H_{17})_2$ | 35 | < -60 | A | A |
| Ex. 2 | $HOP(=O)(OC_{10}H_{21})_2$ | 84 | No data | A | A |
| Ex. 3 | $HOP(=O)(C_8H_{17})(OC_8H_{17})$ | 35 | < -50 | A | A |
| Comp. Ex. 10 | $(HO)_2P(=O)(OCH_3)$ | 146 | < -50 | B (separated with yellowing) | B |
| Comp. Ex. 11 | $O=P(OCH_3)_3$ | 2 | -70 | A | A |
| Comp. Ex. 12 | $HOP(=O)(OC_4H_9)_2$ | 41 | < -50 | B (clouded) | A |

Table 5: Various properties of Fresnel lens

| Sample | State of Fresnel lens just after preparation | | | State of Fresnel lens after acceleration test | | | Vibration test (-20°C) | Overall |
|---|---|---|---|---|---|---|---|---|
| | Releasability | Total light transmittance (%) | Haze value (Δ) | Total light transmittance (%) | Haze value (Δ) | Surface | | |
| Ex. 1 | A | 92.0 | 0.5 | 91.8 | 0.6 | A | A | A |
| Ex. 2 | A | 92.0 | 0.4 | 92.0 | 0.4 | A | A | A |
| Ex. 3 | A | 92.4 | 0.5 | 92.2 | 0.5 | A | A | A |
| Comp. Ex. 10 | C | 93.7 | 17.9 | 95.9 | 60.0 | Sticky | - | C |
| Comp. Ex. 11 | C | 91.7 | 0.4 | 92.0 | 0.5 | A | A | C |
| Comp. Ex. 12 | B | 91.9 | 0.3 | 92.1 | 0.5 | A | - | C |

## Claims

1. A resin composition comprising: an oligomer component comprising urethane (meth)acrylate, produced by reacting a bisphenol A polyalkoxydiol, an organic diisocyanate and a hydroxyl-containing mono(meth)acrylate, and a bisphenol A epoxy (meth)acrylate; a monomer component comprising a phenoxy polyethylene glycol (meth)acrylate and a bisphenol A polyethoxydiol di(meth)acrylate; and a photopolymerization initiator, said resin composition having a refractive index of not less than 1.55 after resin curing

2. The resin composition according to claim 1, which further comprises polyether-modified polydimethylsiloxane as an additive.

3. The resin composition according to claim 2, which further comprises, as an internal release agent, a phosphoric ester represented by formula I or a phosphonic ester represented by formula II:

$$HOP(=O)(OC_nH_{2n+1})_2 \qquad (I)$$

wherein n is an integer of 4 or more; and

$$HOP(=O)(C_nH_{2n+1})(OC_nH_{2n+1}) \qquad (II)$$

wherein n is an integer of 4 or more.

4. The resin composition according to claim 3, wherein, when the concentration of urethane chain in the urethane oligomer contained in the resin composition is 0.5 to 1.3 mmol/g, the content of the release agent is 0.1 to 0.5% by weight based on the resin composition.

5. The resin composition according to claim 3, wherein, when the concentration of urethane chain in the urethane oligomer contained in the resin composition is not less than 0.28 mmol/g and the concentration of OH group contained in the resin composition is 0.41 to 1.2 mmol/g, the content of the release agent is 0.1 to 1.0% by weight based on the resin composition.

6. The resin composition according to any one of claims 1 to 5, which has a glass transition temperature of 19.5 to 23.7°C and an equilibrium modulus of elasticity at 80°C of $1.08 \times 10^8$ to $1.57 \times 10^8$ dynes/$cm^2$

7. The resin composition according to any one of claims 1 to 6, which satisfies a relationship represented by formula We > -0.0189E + 34.2 wherein We represents elastic deformation rate in %; and E represents compression modulus of elasticity in MPa.

8. An optical element comprising the resin composition according to any one of claims 1 to 7.

9. The optical element according to claim 8, wherein said optical element is a Fresnel lens.

## Patentansprüche

1. Harzzusammensetzung umfassend: einen Oligomerbestandteil umfassend Urethan(meth)acrylat, hergestellt durch Umsetzen eines Bisphenol-A-Polyalkoxydiols, eines organischen Diisocyanats und eines Hydroxyl enthaltenden Mono(meth)acrylats, und ein Bisphenol-A-Epoxy(meth)acrylat; einen Monomerbestandteil umfassend ein Phenoxypolyethylen-glykol(meth)acrylat und ein Bisphenol-A-Polyethoxydiol-di(meth)acrylat; und einen Photopolymerisationsinitiator, wobei die Harzzusammensetzung nach Harzaushärtung einen Brechungsindex von mindestens 1,55 aufweist.

2. Harzzusammensetzung nach Anspruch 1, welche ferner als ein Additiv Polyether-modifiziertes Polydimethylsiloxan umfasst.

3. Harzzusammensetzung nach Anspruch 2, welche ferner als ein internes Trennmittel einen durch die Formel I dargestellten Phosphorsaüreester oder einen durch die Formel II dargestellten Phosphonsäureester umfasst:

$$HOP(=O)(OC_nH_{2n+1})_2 \quad (I)$$

wobei n eine Ganzzahl von 4 oder mehr ist; und

$$HOP(=O)(C_nH_{2n+1})(OC_nH_{2n+1}) \quad (II)$$

wobei n eine Ganzzahl von 4 oder mehr ist.

4. Harzzusammensetzung nach Anspruch 3, wobei, wenn die in der Harzzusammensetzung enthaltene Konzentration von Urethankette im Urethanoligomer 0,5 bis 1,3 mmol/g beträgt, der Gehalt des Trennmittels, auf der Harzzusammensetzung basierend, 0,1 bis 0,5 Gew.-% beträgt.

5. Harzzusammensetzung nach Anspruch 3, wobei, wenn die in der Harzzusammensetzung enthaltene Konzentration von Urethankette im Urethanoligomer mindestens 0,28 mmol/g beträgt, und die in der Harzzusammensetzung enthaltene Konzentration von OH-Rest 0,41 bis 1,2 mmol/g beträgt, der Gehalt des Trennmittels, auf der Harzzusammensetzung basierend, 0,1 bis 1,0 Gew.-% beträgt.

6. Harzzusammensetzung nach einem der Ansprüche 1 bis 5, welche eine Glasübergangstemperatur von 19,5 bis 23,7°C und einen Gleichgewichtelastizitätsmodul bei 80°C von 1,08 x $10^8$ bis 1,57 x $10^8$ dyn/$cm^2$ aufweist.

7. Harzzusammensetzung nach einem der Ansprüche 1 bis 6, welche einen durch die Formel We > -0,0189E + 34,2 dargestellten Zusammenhang erfüllt, wobei We die elastische Deformationsrate in % darstellt; und E einen Kompressionselastizitätsmodul in MPa darstellt.

8. Optisches Element umfassend die Harzzusammensetzung nach einem der Ansprüche 1 bis 7.

9. Optisches Element nach Anspruch 8, wobei das optische Element eine Fresnelsche Linse ist.

## Revendications

1. Composition de résine comprenant un constituant oligomère comprenant un uréthane (méth)acrylate, obtenu par une réaction d'un bisphénol A polyalcoxydiol, d'un diisocyanate organique et d'un mono(méth)acrylate hydroxylé, et un bisphénol A époxy(méth)acrylate; un constituant monomère comprenant un phénoxypolyéthylène glycol (méth) acrylate et un bisphénol A polyéthoxydiol di(méth)acrylate; et un initiateur de photopolymérisation, cette composition de résine ayant un indice de réfraction de 1,55 ou plus après durcissement de résine.

2. Composition de résine selon la revendication 1, qui comprend en plus un polydiméthylsiloxane modifié par du polyéther en tant qu'un additif.

3. Composition de résine selon la revendication 2, qui comprend en plus en tant qu'un agent de relâchement intérieur, un ester phosphorique représenté par la formule I ou un ester phosponique représenté par la formule II:

$$HOP(=O)(OC_nH_{2n+1})_2 \quad (I)$$

où n est un nombre entier de 4 ou plus ; et

$$HOP(=O)(C_nH_{2n+1})(OC_nH_{2n+1}) \quad (II)$$

où n est un nombre entier de 4 ou plus.

4. Composition de résine selon la revendication 3, dans laquelle, lorsque la concentration de chaîne d'uréthane dans l'oligomère d'uréthane contenu dans la composition de résine est de 0,5 à 1,3 mmol/g, la teneur en agent de relâchement est de 0,1 à 0,5 % en poids basé sur la composition de résine.

5. Composition de résine selon la revendication 3, dans laquelle, lorsque la concentration de chaîne d'uréthane dans l'oligomère d'uréthane contenu dans la composition de résine n'est pas inférieure à 0,28 mmol/g et la concentration de groupe OH contenu dans la composition de résine est de 0,41 à 1,2 mmol/g, la teneur en agent de relâchement

est de 0,1 à 1,0 % en poids basé sur la composition de résine.

**6.** Composition de résine selon l'une quelconque des revendications 1 à 5, qui présente une température de transition vitreuse de 19,5 à 23,7 °C et un module d'equilibrage statique à 80 °C de 1,08 x $10^8$ à 1,57 x $10^8$ dynes/$cm^2$.

**7.** Composition de résine selon l'une quelconque des revendications 1 à 6, qui satisfait à une relation représentée par la formule We > -0,0189E + 34,2, dans laquelle We représente la vitesse de déformation élastique en %, et E représente le module d'élasticité en compression en Mpa.

**8.** Elément optique comprenant la composition de résine selon l'une quelconque des revendications 1 à 7.

**9.** Elément optique selon la revendication 8, dans lequel ledit élément optique est une lentille Fresnel.

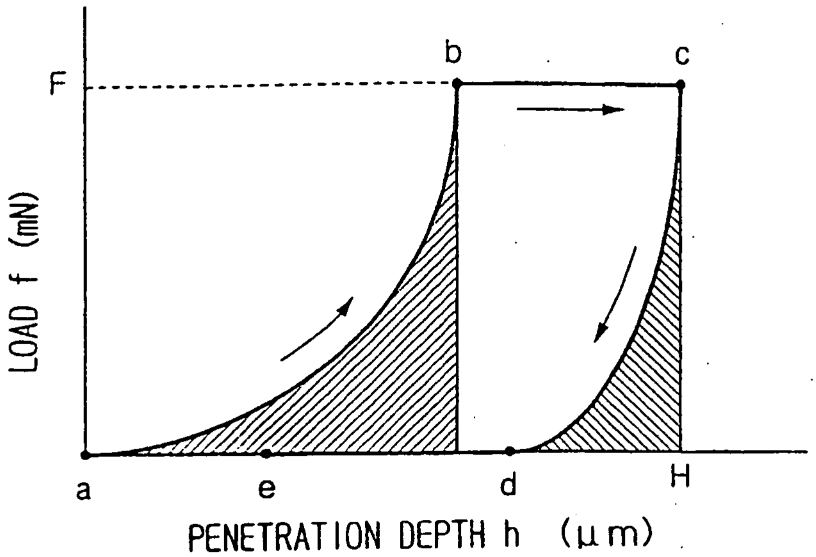
b
c
F
LOAD f (mN)
a
e
d
H
PENETRATION DEPTH h (μm)

FIG. 1

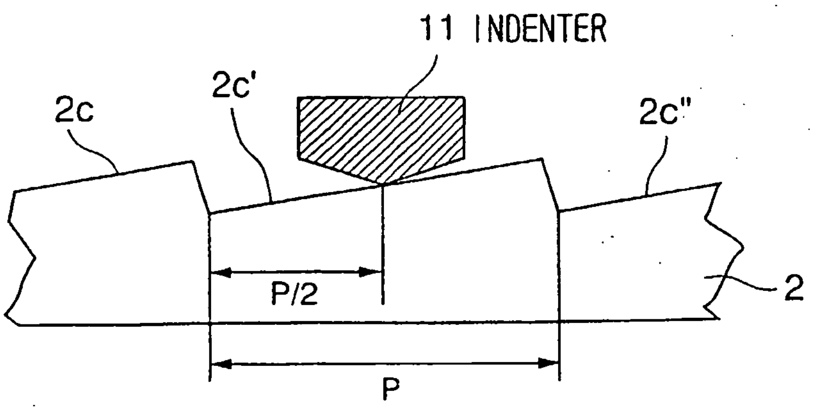
11 INDENTER
2c
2c'
2c"
P/2
2
P

FIG. 2

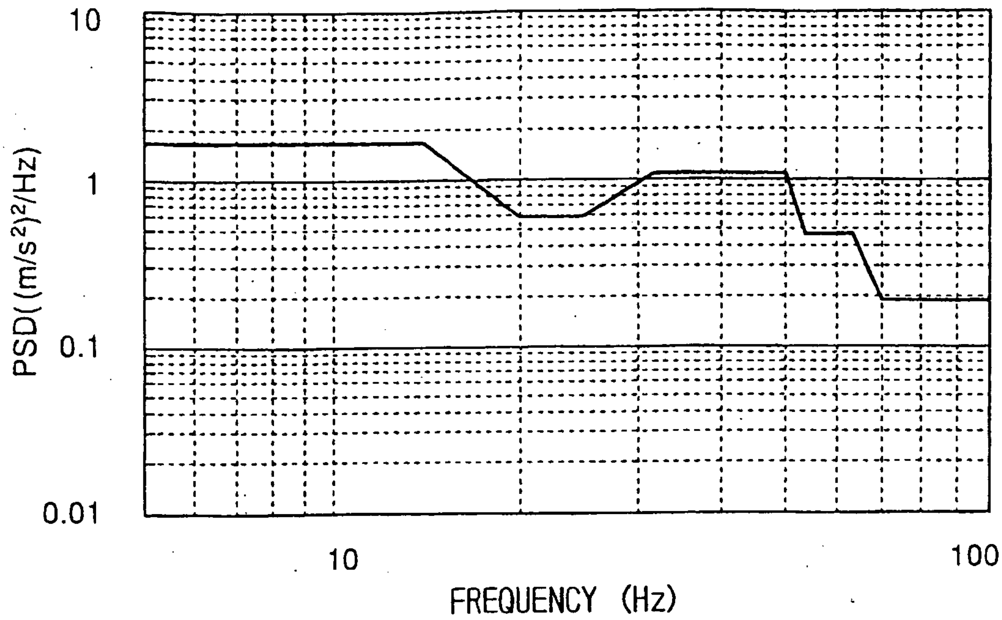
10
1
0.1
0.01
PSD((m/s$^2$)$^2$/Hz)
10
100
FREQUENCY (Hz)

FIG. 3

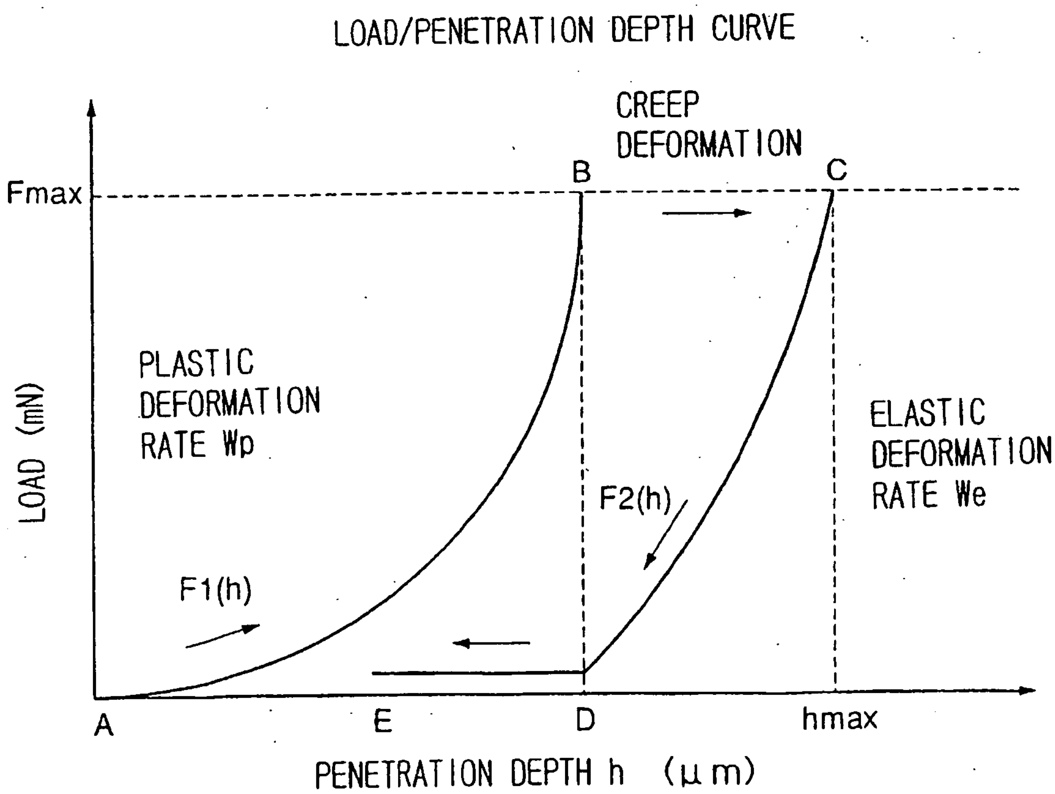
LOAD/PENETRATION DEPTH CURVE
CREEP DEFORMATION
Fmax
B
C
PLASTIC DEFORMATION RATE Wp
ELASTIC DEFORMATION RATE We
LOAD (mN)
F2(h)
F1(h)
A
E
D
hmax
PENETRATION DEPTH h (μm)

FIG. 4